# EUROPEAN PATENT APPLICATION

(11) **EP 2 306 175 A1**
(43) Date of publication of application: **06.04.2011**
(21) Application number: 09275093.4
(22) Date of filing: 05.10.2009
(51) Int. Cl.: G01N 17/04

(54) **Improvements in corrosion sensors**

(71) Applicant: BAE Systems PLC, 6 Carlton Gardens London SW1Y 5AD (GB)
(72) Inventor: The designation of the inventor has not yet been filed
(74) Representative: Thomas, Michael Andrew

(57) **Abstract**

A corrosion sensor for detecting the action of corrosive media includes a substrate, a conductive thin film formed on the substrate, and a layer of a protective substance which partially overlays the conductive thin film. The protective substance includes a corrosion inhibitor, and has a plurality of defects formed therein. Each defect exposes a portion of the underlying conductive thin film. The defects are in the form of a two dimensional array.

## Description

This invention relates to corrosion sensors for detecting the action of corrosive media, for example the action of corrosive media acting on a metallic material when a sensor mounted in situ adjacent a location in the metallic material.

Corrosion is a problem which leads to high maintenance and repair overheads in many different industries. Prompt detection of problems caused by corrosion is necessary in order for effective mitigation strategies to be put in place, and so various different methods of detecting corrosion in a metallic material have been developed.

Two known types of corrosion sensor are described in the Applicant's published European Patent Applications, Publication Numbers EP 1554563 and EP 1546679. These prior-known sensors comprise patterned conductive thin films formed on a substrate. The film, which is made of a material that mimics the characteristics of the bulk material to which the sensor is attached, defines a plurality of serpentine tracks extending between common terminals. These sensors can be used as resistive sensors, in which case the resistance of the sensors is measured over a period of time. The result of the action of corrosive media on the tracks is an increase in the overall resistance of the sensor, as measured between the common terminals. This measured increase in resistance can then be related to the effects of corrosion acting on the bulk structure to which the sensor is attached.

An alternative corrosion sensing strategy is proposed in the paper "Corrosion Sensors in Platform Management" by D. G. Dixon, M. C. Hebbron, S. J. Harris and A. Rezai and presented at the 1st World Congress on Corrosion in the Military, 1st June 2005 (the entire contents of which are herein incorporated by reference). The authors refer to the above-referenced published patent applications, and propose a similar resistive sensor. However, the sensor disclosed by Dixon et al. is covered with a corrosion-inhibiting primer paint that is provided with an intentional defect in order to mimic, for example, the effect of a crack. The sensor is located on the structure to be monitored. At first, the defect will be protected from corrosive media by inhibitor species leaching from the paint, but, once the reservoir of inhibitor is exhausted, the sensor tracks will corrode, and a corresponding increase in the sensor resistance will be measured. Corrective action can be taken. Such sensors can be termed "Inhibitor Depletion Sensors".

In one particular prior art corrosion sensor of the inhibitor depletion type described above, a conductive thin film is provided which is patterned to produce a ladder-like configuration having three tracks running between common terminals. The tracks are of differing width, and each have formed thereon a defect. Each defect is of a different size. By introducing a number of differently-sized defects, each over one rung of the ladder, a "traffic light" like system is provided wherein the track beneath the largest defect will corrode first, followed by the track under the intermediate size defect, followed by the track under the smallest size defect.

Further types of inhibitor depletion sensors are described in the Applicant's published International Patent Application WO2008/125878 (the entire contents of which are incorporated herein by reference). This document also discloses inhibitor depletion sensors having a ladder-like configuration of conductive tracks. In these embodiments, the conductive tracks are narrower than the conductive tracks in the above-described sensor and can be of the same width. Again, defects are formed of differing sizes to provide a "traffic light" type system.

It has been found that the conductive tracks of at least some embodiments of the above described inhibitor depletion sensors can be susceptible to certain local effects. Also, it has been found that at least some embodiments of the above described inhibitor depletion sensors corrode in an anisotropic fashion, i.e., the rate of corrosion of the conductive tracks is dependent on the orientation of the defect relative to the direction of flow of the corrosive medium across it.

The present invention, in at least some of its embodiments, addresses the above-described problems, and also provides a novel class of corrosion sensors which, in at least some embodiments, can be used to test the performance of corrosion inhibiting paints.

According to a first aspect of the invention there is provided a corrosion sensor for detecting the action of corrosive media, the sensor including:
a substrate;
a conductive thin film formed on the substrate; and
a layer of a protective substance which partially overlays the conductive thin film, the protective substance including a corrosion inhibitor;
wherein the layer of the protective substance has a plurality of defects formed therein, each defect exposing a portion of the underlying conductive thin film, in which the defects are in the form of a two dimensional array.

In this way, it is possible to provide a corrosion sensor which acts as a conductive track of relatively large length having many interfaces between the conductive thin film in the defects, and the protective substance at the boundaries of the defects. This reduces the significance of any particular area of local corrosion to the operation of the sensor. Additionally, by providing defects in the form of a two dimensional array it is readily possible to provide arrangements in which the rate of corrosion is not orientation dependent.

The layer of the protective substance may be substantially circular. This can reduce any dependence of the rate of corrosion on the orientation of the sensor.

Preferably, the two dimensional array of defects is an array of n rows and m columns of defects, wherein n and m are both greater than three. Successive rows and/or columns may be offset somewhat to provide a 'honeycomb' arrangement of defects. However, other arrangements, such as a circularly disposed array, might be contemplated.

The two dimensional array may have a high degree of rotational symmetry. This can reduce any dependence of the rate of corrosion on the orientation of the sensor.

Advantageously, the defects are each in the form of a polygon having a rotational symmetry of the order of four or greater, preferably of the order of five or greater, and most preferably are each in the form of a hexagon. In this way, defects having a high degree of symmetry are provided which in turn can reduce any dependence of the rate of corrosion on the orientation of the sensor.

In alternative embodiments, the defects may be in the form of a non-polygonal shape having a high rotational symmetry. For example, the defects may be each substantially circular.

Advantageously, the defects in the array are of substantially identical sizes.

Preferably, adjacent defects in the array are separated by a gap, and the gap is substantially identical for each pair of adjacent defects.

Preferably, adjacent defects in the array are separated by a gap, and the gap has a width which is substantially uniform. The preferred hexagonal defect shape is advantageous in this regard, because it is readily possible to provide arrays of hexagonal defects in a 'honeycomb' arrangement in which the gap between adjacent hexagonal defects is substantially uniform. An advantage of arrays having substantially uniform gaps is that a substantially uniform amount of protective substance is located around each defect. It can be expected that, consequentially, each defect is surrounded by a uniform and quantifiable amount of corrosion inhibitor. In this way, it is possible to correlate the observed corrosion rates with the quantity of corrosion inhibitor present. This opens up the possibility of using corrosion sensors to test the performance of protective substances of the type which include a corrosion inhibitor. Such tests may quantify the effects of a given amount or concentration of inhibitor.

Preferably, the dimensions of the defects are in the range 0.1 to 5 mm.

Generally, the protective substance is a paint.

The protective substance may be selected to mimic characteristics of a protective substance covering a metallic material adjacent to which the sensor is amounted. Such a protective substance may simply be the same as the protective substance covering the metallic material, or may be modified in order to mimic the characteristics of the protective substance covering the metallic material, for example by altering the concentration of the corrosion inhibitor in the protective substance. The corrosion inhibitor is typically a suitable ion, such as Cr⁶⁺.

Typically, the conductive thin film is metallic. The conductive thin film may be any suitable metal or metal alloy, such as aluminium or aluminium alloy.

The invention extends to a corrosion sensing system including a plurality of corrosion sensors as defined above. Advantageously, in the corrosion sensing system, the size of the defects of at least one corrosion sensor is different to the size of the defects of at least one other corrosion sensor in the system. The total surface areas of the defects in each of the corrosion sensors may be substantially equal. The invention further extends to a metallic structure including a corrosion sensor or a corrosion sensing system as defined above.

Whilst the invention has been defined above, it also extends to any inventive combination of the features set out above, or in the following description, drawings or claims.

Embodiments of corrosion sensors and corrosion systems in accordance with the invention will now be described with reference to the accompanying drawings, in which:-
Figure 1 shows (a) a plan view of a first embodiment of a corrosion sensor and (b) a cross sectional view through the sensor of (a) in the vicinity of a defect; and
Figure 2 is a plan view of a second embodiment of a corrosion sensor.

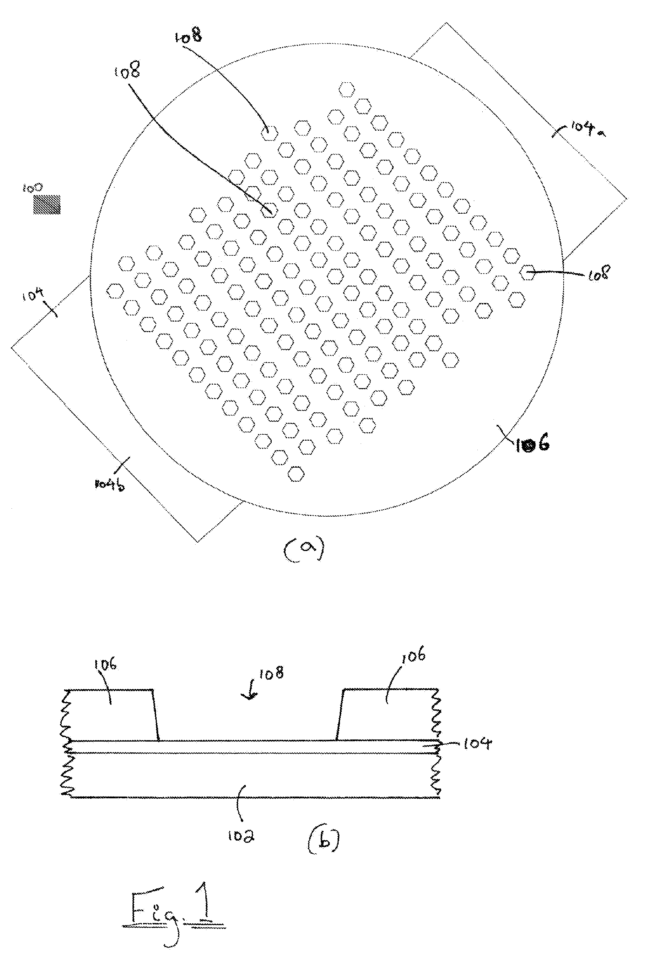

Figure 1 shows a corrosion sensor 100 in accordance with the first embodiment of the invention. The corrosion sensor 100 comprises a substrate 102, a conductive thin film 104 formed thereon, and a patterned paint layer 106. The paint layer 106 is patterned so that an array of defects are incorporated thereon. Each defect 108 is a hexagonally shaped aperture in the paint layer 106 which exposes a portion of the underlying conductive thin film 104. The defects 108 are arranged in a two dimensional array, i.e., the array is described by two orthogonal axes, rather than a single linear or curvilinear axis.

The paint is of a type comprising a leachable corrosion suppressant having an active corrosion inhibitor, such as cromate ions. The corrosion inhibitors leach out of the paint at or around any defects therein, thereby providing continuing protection even in the presence of minor defects of the paint. An example of a suitable paint is the primer paint PR205, which is commercially available from PRC DeSoto. PR205 is a high-solids, cromate-loaded epoxy-based primer. Generally, with primer paints of this kind, a suitable topcoat would be applied to the primer paint. A suitable topcoat for use with PR205 is HP03682, also available from PRC DeSoto. Typically, a surface treatment is applied to the thin film in order to assist the anchoring of the paint to the thin film. Any suitable surface treatment, such as a chromate conversion coating, might be used.

The conductive thin film 104 has oppositely opposed ends 104A, 104B in the form of tabs which can be used to make electrical connection with a suitable interrogation system for measuring an electrical property of the sensor 100, which is typically resistance. When the defects 108 are formed, the inhibitor ions leach out of the paint thereby protecting the exposed conductive thin film layer in the defects from corrosive media. This protection from corrosive media will last for a period of time during which a sufficient supply of inhibitor ions leaches from the paint surrounding the defect. However, once the supply of inhibitor ions falls below a certain level, the defects will begin to corrode. This results in a measurable decrease in the resistance between the tabs 104A, 104B. The thin film conductive layer 104 can be regarded as a long conductive track which, owing to the presence of the two dimensional array, has a large number of interfaces between the paint and the material of the thin film conductive layer. A further advantage is that the high symmetry of the hexagonal defects 108, the two dimensional array and the circular paint layer reduces any orientation dependence of the sensor response to the corrosive media. Another advantage associated with the provision of hexagonal defects is that the paint layer can be patterned so that there is a uniform gap between hexagons in the array. This means that there is a defined and constant amount of paint, and hence corrosion inhibitor, between the hexagonal defects 108. This means that there is a constant and controllable amount of corrosion inhibitor available to leach into the hexagonal defects at all points around the periphery of the defects. This opens up the possibility of using corrosion sensors of the present invention to test corrosion inhibiting paints in a quantitative manner. For example, the corrosion inhibition of the paint can be related to its composition.

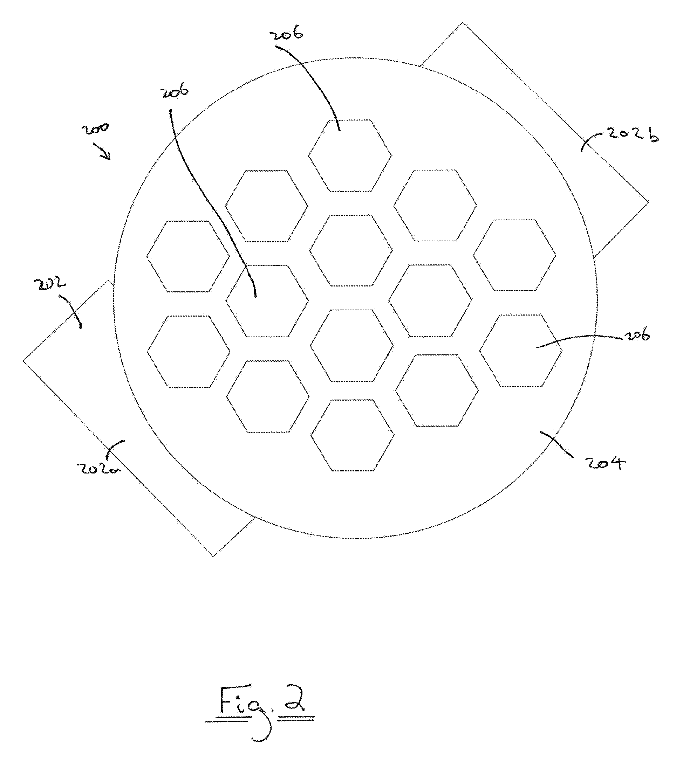

Figure 2 depicts a corrosion sensor 200 in accordance with a second embodiment of the invention. The corrosion sensor 200 shares many of the features of the corrosion sensor 100 of the first embodiment of the invention. In particular, the corrosion sensor 200 comprises a conductive thin film 202 having oppositely opposed tabs for electrical connections. The conductive thin film 202 is formed on a substrate (not shown). A circular protective paint layer 204 is formed on the conductive thin film 202, and the paint layer has a plurality of hexagonally shaped defects 206 formed therein which reveal the underlying conductive thin film layer 202. The defects 206 are arranged in a two dimensional array. In contrast with the first embodiment of the invention shown in Figure 1 there are fewer hexagonal defects in the second embodiment of the invention shown in Figure 2, but each hexagonal defect 206 is larger than the hexagonal defects 108 of the first embodiment. Because the hexagonal defects 206 of the second embodiment are of a larger scale, the "reservoir" of corrosion inhibitor in the paint will be exhausted more quickly and therefore the defects will corrode more quickly than the defects in the first embodiment of the invention (in a scenario in which both embodiments are exposed to identical corrosive conditions).

A plurality of corrosion sensors of the present invention having different defect sizes can be provided in order to produce a corrosion sensing system wherein the progress of corrosion can be detected. Two, three or even more corrosion sensors having differently sized defects might be provided for this purpose. It should be noted that the present invention enables a plurality of corrosion sensors to be produced having defects of different size, wherein the total surface area of the defects in each sensor is substantially identical. This may be achieved generally in the manner shown in Figures 1 and 2, i.e., by reducing the number of defects in the array as the size of the individual defects increases. This feature of the present invention may be useful in the paint testing application described above. It may be possible to provide a single sensor, having defects of different sizes. The differently sized defects might be present in a single array, or the sensor may have a plurality of different arrays, wherein the defects of at least one array are different from the defects of at least one other array on the sensor.

Sensors of the present invention may be fabricated in a similar manner to that described in WO2008/125878, and other prior-known sensors. The conductive thin film layer is preferably deposited on the substrate by sputtering. The substrate can be formed from any suitable insulating material in which a thin film can be deposited, such as Mylar^{™} or polyimide. Alternatively, a conducting substrate coated with an isolating layer of, for example, polyimide can be used.

The conductive thin film is typically metallic. In many applications, the sensor is intended to be attached to a bulk metallic material, and generally in such applications the thin film comprises a material which mimics the bulk metallic material. In some envisaged applications, the bulk metallic material is a metallic alloy, and in these cases the thin film is preferably formed from an alloy having alloying constituents in similar proportions to the respective bulk alloy being mimicked. In some preferred embodiments, such as embodiments in which the corrosion sensor is used in aircraft, the thin film is made from aluminium or aluminium alloy such as an aluminium copper alloy, an aluminium silicon alloy, an aluminium silicon copper alloy, etc. However, other aluminium alloys or indeed other metallic structures, are within the scope of the invention. The thickness of the thin film is determined by the materials used and the application envisaged. Typically, thicknesses in the range 0.1 to 2 µm are used, with preference often being given to thicknesses at the lower end of the range, in order to provide a higher sensor resistance.

The paint layer can be applied to the conductive thin film by any suitable means, such as by spraying. Preferably, the two dimensional array of defects is formed by an etching technique wherein a mask is formed on the paint layer to expose the intended sites of the defects, which are then etched using chemical or dry etching techniques. The nature of the mask and the etch process utilised can be chosen depending upon the type of paint used as would be understood by the skilled reader. For example, ethylene glycol may be used as an etchant for PR205. Alternatively, it is possible to apply a mask to the conductive thin film prior to application of the paint.

As described above, the detection of the onset of corrosion may be accomplished through the measurement of an electrical property of the sensor, such as resistance. However, corrosion may be detected by other means, such as by visual inspection (either unaided or with assistance from a suitable optic device, such as a microscope) or imaging.

Corrosion sensors and corrosion sensing systems of the present invention may be utilised in numerous application areas. For example, the present invention may be utilised in aircraft, in oil or gas lines, in various heavy industrial applications, and also in paint manufacture.

## Claims

1. A corrosion sensor for detecting the action of corrosive media, the sensor including:
a substrate;
a conductive thin film formed on the substrate; and
a layer of a protective substance which partially overlays the conductive thin film, the protective substance including a corrosion inhibitor;
wherein the layer of the protective substance has a plurality of defects formed therein, each defect exposing a portion of the underlying conductive thin film, in which the defects are in the form of a two dimensional array.

2. A corrosion sensor according to claim 1 in which the layer of the protective substance is substantially circular.

3. A corrosion sensor according to claim 1 in which the two dimensional array of defects is an array of n rows and m columns of defects, wherein n and m are both greater than 3.

4. A corrosion sensor according to any previous claim in which the defects are each in the form of a polygon having a rotational symmetry of order four or greater, preferably of order five or greater, and most preferably are in the form of a hexagon.

5. A corrosion sensor according to claim 5 in which the defects are each substantially circular.

6. A corrosion sensor according to any previous claim in which the defects in the array are of substantially identical sizes.

7. A corrosion sensor according to any previous claim in which adjacent defects in the array are separated by a gap, the gap being substantially identical for each pair of adjacent defects.

8. A corrosion sensor according to any previous claim in which adjacent defects in the array are separated by a gap, the gap having a width which is substantially uniform.

9. A corrosion sensor according to any previous claim in which the dimensions of the defects are in the range 0.1 to 5mm.

10. A corrosion sensor according to any previous claim in which the protective substance is a paint.

11. A corrosion sensor according to any previous claim in which the conductive thin film is metallic.

12. A corrosion sensor according to claim 11 in which the conductive thin film is aluminium or an aluminium alloy.

13. A corrosion sensing system including a plurality of corrosion sensors according to any preceding claim.

14. A corrosion sensing system according to claim 13 in which the size of the defects of at least one corrosion sensor is different to the size of the defects of at least one other corrosion sensor in the system.

15. A metallic structure including a corrosion sensor according to any one of claims 1 to 12 or a corrosion sensing system according to claim 13 or claim 14.
